# EUROPEAN PATENT APPLICATION

(11) **EP 4 364 927 A1**
(43) Date of publication of application: **08.05.2024**
(21) Application number: 22306670.5
(22) Date of filing: 04.11.2022
(51) Int. Cl.: B29C 64/209, B22F 12/53, B29C 64/393, B33Y 30/00, B33Y 50/02, B28B 1/00, B29C 48/31

(54) **A NOZZLE FOR 3D PRINTING, A SYSTEM TO CONTROL SAID NOZZLE AND A 3D PRINTING DEVICE COMPRISING SAID SYSTEM**

(71) Applicant: Centre national de la recherche scientifique, 75016 Paris (FR); Université de Strasbourg, 67000 Strasbourg (FR); Institut National Des Sciences Appliquees, 67000 Strasbourg (FR)
(72) Inventor: BARBE, Laurent, 67730 CHATENOIS (FR); RENAUD, Pierre, 67300 SCHILTIGHEIM (FR); WACH, Benoît, 67220 BASSEMBERG (FR); RUBBERT, Lennart, 67000 STRASBOURG (FR); GEISKOPF, François, 67117 ITTENHEIM (FR); SIMONCELLI, Thomas, 67100 STRASBOURG (FR)
(74) Representative: Gevers & Orès

(57) **Abstract**

A nozzle (NZ) comprising:
- a channel (CHN) made of a material with an elastomer-like behavior and having a longitudinal axis (X);
- at least two mechanical structures (S1, S2) for transmitting a movement to said channel, said at least two mechanical structures being staged along the longitudinal axis (X) of the channel and each mechanical structure comprising at least two arms (AR11, AR12, AR21, AR22) extending in a radial direction (R) with a first end (FE11, FE12, FE21, FE22) connected to the channel.

## Description

### Technical field of the invention

The present invention concerns the field of 3D printing, especially extrusion-based 3D printing.

### Prior art

3D printing is known for a while but many current developments still aim at improving its capabilities, for instance by extending its applicability to different fields (civil engineering, automotive industry, medical applications ...). According to the field concerned, the materials to be printed generally have different rheologic properties which have an impact on the printed products that can be obtained, or on the quality of printing, or even sometimes on its feasibility. Indeed, the materials that can be used can have a high viscosity (e.g. paste-like materials such as cement, for example in civil engineering or such as silicone for example in industrial applications) or, to the contrary, a low viscosity (e.g. for bioprinting). The impact of the rheologic properties on the printed products is especially critical with materials having a low viscosity.

One critical in the control of the printing is the shape of the channel of the nozzle.

Generally, the dimensions and the shape of the channel of the nozzle are fixed. For example, the channel of the nozzle has often a conical shape with fixed dimensions with an outlet orifice of circular cross-section in numerous applications. We may however find for specific applications other fixed shapes. For instance, in bioprinting, needles are often used, either cylindrical or conical in shape with fixed dimensions. As another example, in civil engineering, the channel of the nozzle, as well as its outlet orifice, often present a rectangular section.

Nevertheless, the rheological behavior of the material to be printed, as well as the geometric features of the filament outputting from the channel of the nozzle are strongly affected by the shape and dimensions of the channel and by the shape and dimensions of its outlet orifice. Therefore, the shape and dimensions of the channel of the nozzle as well as the shape and the dimensions of its outlet orifice have an impact on the properties of the printed material and finally, on the features of the product manufactured by 3D printing.

To date, many research teams have already proposed solutions capable of changing the shape and/or the size of the outlet orifice of the channel. We may for instance refer to WO2018/115467A1 (PA1, diaphragm of iris type to be capable of changing the size of the outlet orifice of the channel of the nozzle), WO2019/213600A1 (PA2, elastic membrane to be capable of changing the size of the outlet orifice of the nozzle under the effect of pressure within the channel), US2020/0398472A1 (PA3, elastic membrane associated with linear actuators to be capable of changing both the size and shape of the outlet orifice of the channel of the nozzle) and WO2021/145818A1 (PA4, slidable plates to be capable of changing the size of the outlet orifice of the channel of the nozzle).

Also, to date, it is to be noted that few research teams brought attention to find a solution in order to change the size and/or the shape of the channel of the nozzle as a whole.

However, US 2021/0122110A1 (PA5) discloses a nozzle which channel shape along its longitudinal axis that may take different configurations. For that, the channel of the nozzle is made of several stages stacked along its longitudinal axis, each stage having the possibility to have different shapes thanks to a rod connecting several hollow and axisymmetric shapes. Each rod is linearly actuated by a dedicated actuator. Such a solution also allows modifying the size and/or shape of the outlet orifice, by choosing the shape of the lowest stage.

In an alternative embodiment, the rod may be replaced by a disc for which actuation is no longer linear but rotative.

The configurations in shape for both the shape of the nozzle and its outlet made possible with this solution are however quite limited. Additionally, going from one configuration to another one demands to stop the flow of material to be printed, as during a change of configuration, the channel of the nozzle no longer exists. The change of configuration cannot be made during printing. And for some applications, e.g. bioprinting where materials with a low viscosity are used, the interruption of printing may jeopardize the printing quality.

This solution may finally be seen as an improvement with regard to a set of nozzles available in stock and that may be mounted as desired on the printhead by a user, the improvement consisting of providing an automatic and then quicker change form a limited number nozzle configurations.

### Summary of the invention

An aim of the invention is to provide an improved solution to control the shape of the channel of the nozzle.

In particular, an aim of the invention is to provide a solution capable of continuously changing both the size and shape of the channel of the nozzle as well as consequently the size and shape of the outlet orifice of the channel.

To reach this aim; it is proposed a nozzle comprising:
- a channel made of a material with an elastomer-like behavior and having a longitudinal axis;
- at least two mechanical structures for transmitting a movement to said channel, said at least two mechanical structures being staged along the longitudinal axis of the channel and each mechanical structure comprising at least two arms extending in a radial direction with a first end connected to the channel.

The nozzle according to the invention may comprise the following features, taken alone or in combination:
- each mechanical structure comprises at least three arms extending in a radial direction with a first end connected to the channel, said arms being regularly distributed around the longitudinal axis of the channel;
- the mechanical structure is in the form of a plate placed perpendicularly to the longitudinal axis of the channel, said plate including at least one mechanical element of transmission of movement which a first end is connected to an internal part of the plate and which a second end is connected to a second end of one of said at least two arms;
- said at least one mechanical element of transmission of movement is chosen amongst an auxetic structure or a lever;
- the material with the elastomer-like behavior is partially reinforced with a material more rigid than said material with the elastomer-like behavior in such a way to have an anisotropic behavior.

It is also proposed in the frame of the invention a system comprising:
- a nozzle according to the invention;
- at least one actuator per mechanical structure of transmission of movement to the channel, said at least one actuator being configured to actuate one or several arms of at least one of the mechanical structures; and
- a control system for said at least one actuator.

The system according to the invention may comprise the following features, taken alone or in combination:
- the system comprises, for each mechanical structure, an actuator per arm;
- said at least one actuator is a fluidic actuator or a piezoelectric actuator.

It is also proposed in the frame of the invention a 3D printing device comprising:
- a robotic arm comprising several degrees of freedom ;
- a printhead mounted on an end of the robotic arm ;
- a system according to the invention, which nozzle is mounted on the printhead.

In addition, said robotic arm of the 3D printing device may comprise six degrees of freedom, three in position and three in rotation.

It is finally proposed in the frame of the invention an actuation method implemented with a system according to the invention, comprising a step wherein said control system provides instructions to the at least one actuator in order to, from a rest position of the nozzle, pull the arm of the actuator.

### Brief description of the figures

The invention will be better understood with the help of the description that follows only provided as an example and carried out by reference to the annexed drawings in which:
- Figure 1 shows a nozzle for 3D printing according to a first embodiment of the invention, with several views, namely an isometric view in figure 1(a), a top view in figure 1(b) and a cut-off view in fig. 1(c);
- Figure 2 shows an isometric and exploded view of a nozzle for 3D printing according to a second embodiment of the invention;
- Figure 3 shows the nozzle of Figure 2, non-exploded;
- Figure 4 is a general representation of a system according to the invention comprising the nozzle of the invention;
- Figure 5 shows an embodiment of a mechanical structure for transmitting a movement to the channel of the nozzle;
- Figure 6 particularly an example of actuator, in that case fluidic, that may be used in conjunction with the mechanical structure shown in Figure 5, at rest in figure 6a and in operation in figure 6b;
- Figure 7 illustrates the effect of an actuation of the actuator shown in Figure 6 on the deformation of the channel of the nozzle, by providing the channel at rest in figure 7a and once deformed in figure 7b;
- Figure 8 shows, for illustrative purposes, a possible shape that may be given to the channel as a whole, namely along it longitudinal axis, by the actuation of an actuator as shown in Figure 6 for each of two staged mechanical structures for transmitting a movement to the channel;
- Figure 9 particularly shows another example of actuator, in that case piezoelectric, that may be used in conjunction with the mechanical structure shown in Figure 5;
- Figure 10 shows another possible combination of an actuator, in that case piezoelectric, with another design for the mechanical structure for transmitting a movement to the channel of the nozzle;
- Figure 11 shows another embodiment of a mechanical structure for transmitting a movement to the channel of the nozzle;
- Figure 12 shows an alternative embodiment to that shown in Figure 5;
- Figure 13 represents a nozzle wherein a mechanical structure for transmitting a movement to the channel of the nozzle comprises three arms, one of which being fixed to a fixed part of the nozzle, at rest in figure 13a and in operation in figure 13b;
- Figure 14 represents a nozzle wherein a mechanical structure for transmitting a movement to the channel of the nozzle comprises two arms, both connected to an actuator, at rest in figure 14a and in operation in figure 14b;
- Figure 15 represents a nozzle wherein a mechanical structure for transmitting a movement to the channel of the nozzle comprises two arms, one of which being fixed to a fixed part of the nozzle, at rest in figure 15a and in operation in figure 15b;
- Figure 16 shows an embodiment wherein the channel of the nozzle is made of a material comprising parts more rigid than the rest of the material having an elastomer-like behavior;
- Figure 17 shows a robotic arm comprising a printhead including a nozzle according to the invention.

### Detailed description of the invention

The invention proposes a nozzle NZ for 3D printing.

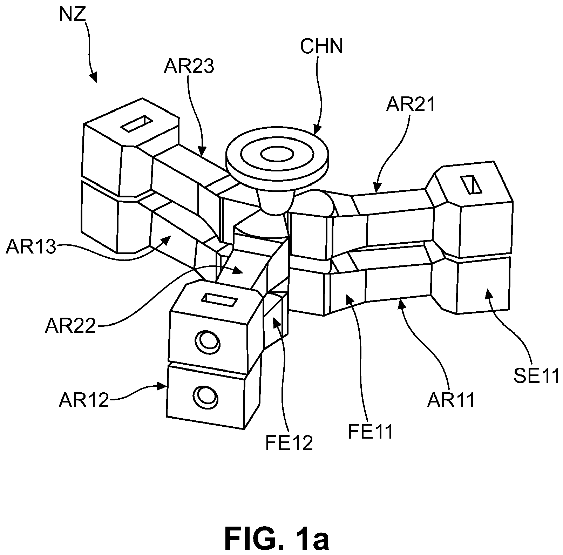

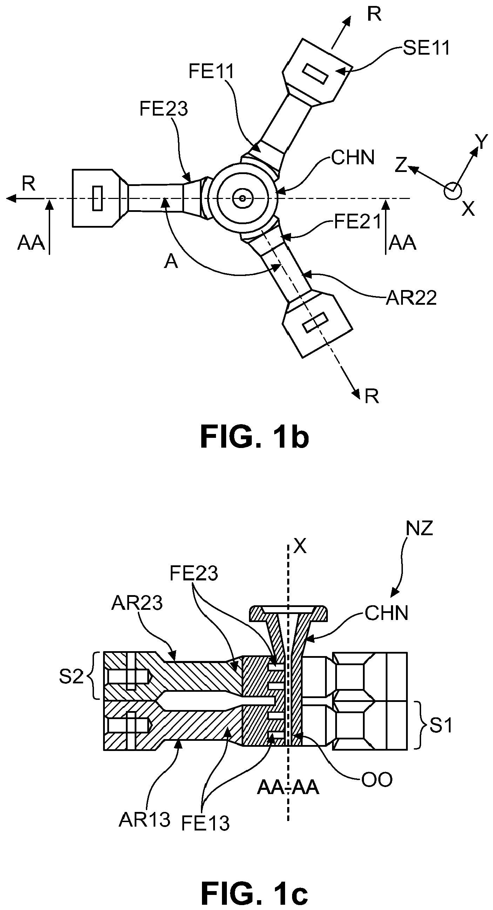

Figure 1 represents a first embodiment of a nozzle according to the invention.

The nozzle NZ comprises a channel CHN having a longitudinal axis X and made of a material having an elastomer-like behavior. Such a material, thanks to intrinsic high elasticity, may be deformed with the application of a low force. In that way, the channel is sufficiently flexible to enable its change of shape and/or dimensions. For example, the material may be an elastomer or a thermoplastic elastomer. As a more explicit example, we may use for the channel CHN a silicone from BlueStar Silicones with the following properties: Shore A hardness = 28, tensile strength at break = 7,5MPa, elongation at break = 600% and tear strength = 20kN/m.

The nozzle NZ also comprises at least two mechanical structures S1, S2 for transmitting a movement to the channel CHN. These mechanical structures S1, S2 are staged along the longitudinal axis X of the channel CHN. Two staged mechanical structures S1, S2 are a minimum to be able to precisely change the shape of the channel CHN, as well as the shape of the outlet orifice OO of the channel CHN.

Moreover, each mechanical structure S1, S2 comprises at least three arms AR11, AR12, AR13 AR21, AR22, AR23 regularly distributed around said longitudinal axis X. The angle A between two arms is of 120°. Each arm further extends in a radial direction R, a first end FE11, FE12, FE13, FE21, FE22, FE23 of which being connected to the channel CHN.

The presence of at least three arms per mechanical structure S1, S2 offers many possibilities to deform the channel.

Indeed, the combination of the stages mechanical structures S1, S2 with at least three arms and a deformable channel allows, in a continuous manner: a) deforming the channel as desired to obtain a non-limited number of shapes for the channel, b) changing the shape of the outlet orifice also as desired, for example to get a non-symmetrical shape, c) moving the axis of extrusion (when the channel is at rest, the axis of extrusion corresponds to the longitudinal axis X of the channel).

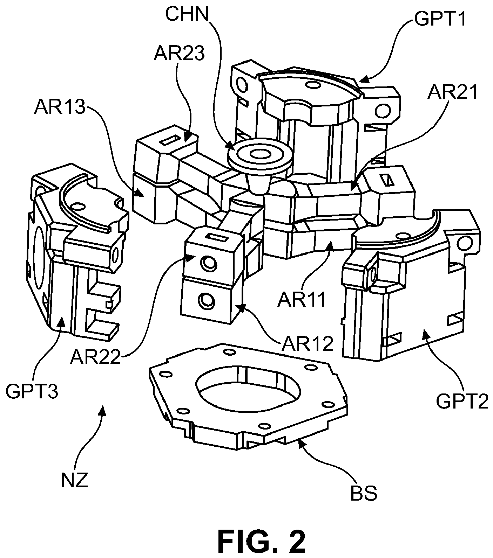

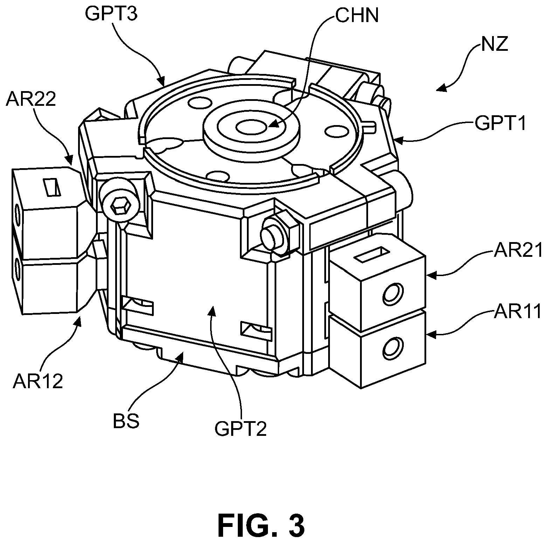

Figures 2 and 3 represent a second embodiment of a nozzle according to the invention.

This embodiment takes back all the features described here above for the nozzle of the first embodiment.

Nevertheless, in the second embodiment, the nozzle NZ comprises guiding parts GPT1, GPT2, GPT3 for the arms. We can refer to figure 2 (exploded view) and more specifically to figure 3 when the different guiding parts are assembled together and with a base BS. These guiding parts improve the linear guidance of the arms.

For both embodiments, the nozzle NZ may be manually adjusted, by adjusting the position of each arm manually, for example with a system of endless screw (not shown) integrated within each arm. A shape for the channel CHN may thus be defined for a certain period of time in order to print a 3D product.

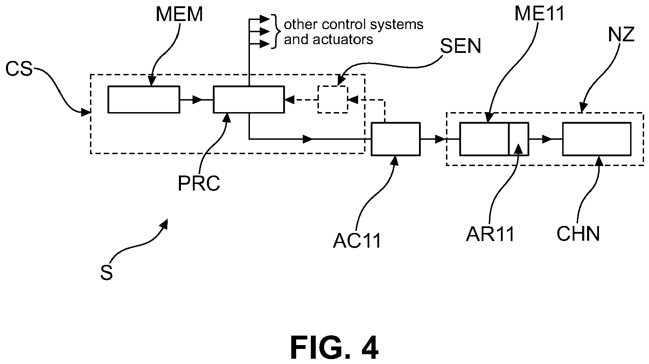

Nevertheless, it is more interesting to use a system S comprising the nozzle NZ, at least one actuator AC11, and a control system CS to control the displacement of said at least one actuator, as shown in Figure 4.

It should be noted that, for simplification purposes, figure 4 only shows the actuation of one arm AR11 belonging to one S1 of the staged mechanical structures S1, S2.

The control system CS may comprise a memory MEM provided with a database stocking instructions to be given to said at least one actuator AC11, at least one processor PRC configured to receive instructions from the database and to provide instructions to the at least one actuator AC11, and optionally a sensor SEN which may sense the position of the at least one actuator AC11 and provide it to the at least one processor PRC.

As can be seen also from Figure 4, the nozzle comprises a mechanical element ME11 for transmission of movement between the actuator AC11 and the arms AR11.

There are, in practice, several ways to design such a mechanical element ME11, as well as an actuator AC11.

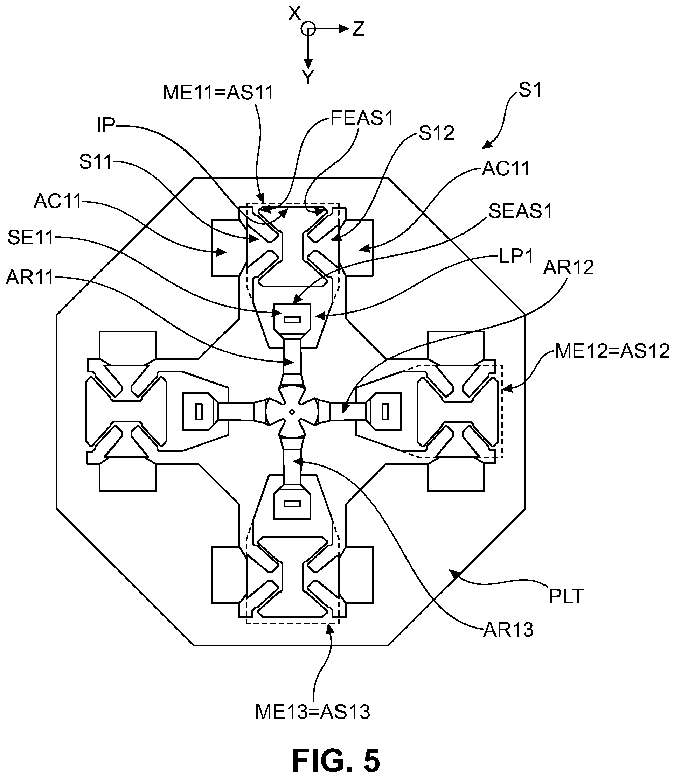

Figure 5 shows for instance a possible design for the mechanical element ME11.

More precisely, figure 5 shows the mechanical structure S1 in the form of a plate PLT placed perpendicularly to the longitudinal axis X of the channel CHN. The plate PLT includes said at least one mechanical element ME11 of transmission of movement which a first end FEAS1 is connected to an internal part IP of the plate PLT and which a second end SEAS1 is connected to a second end SE11 of one AR11 of the arms (there are four in figure 5 for illustration purposes but a similar plate may be made with three mechanical elements for transmitting the movement), in order to be used with the nozzle represented in figures 1 to 3. Each mechanical element ME11, ME12, ME13, is in the form of an auxetic structure AS11, AS12, AS13 (see the dotted lines), respectively.

An auxetic structure consists of a cell (or of a number of cells, but in figure 5, there is only one cell per auxetic structure) arranged in such a way that the structure expands when stretched and contracts when compressed. As an example, figure 5 shows an external action F1, F2 (Z direction) applied by the control structure on the sides S11, S12 of the auxetic structure AS11 aiming at compressing these sides. It brings about a contraction of the lower part LP1 of the auxetic structure AS11 represented by the arrow F (Y direction), perpendicular to the Z direction if F1 = F2 and given the symmetric construction of the auxetic structure AS11). An auxetic structure may thus be defined as a structure with a negative Poisson's ratio.

In figure 5, we refer to the mechanical structure S1, but the above-mentioned comments could apply to the mechanical structure S2 as well.

With the design of the mechanical structure S1, S2 proposed in figure 5 (auxetic structure), many types of actuators may be used.

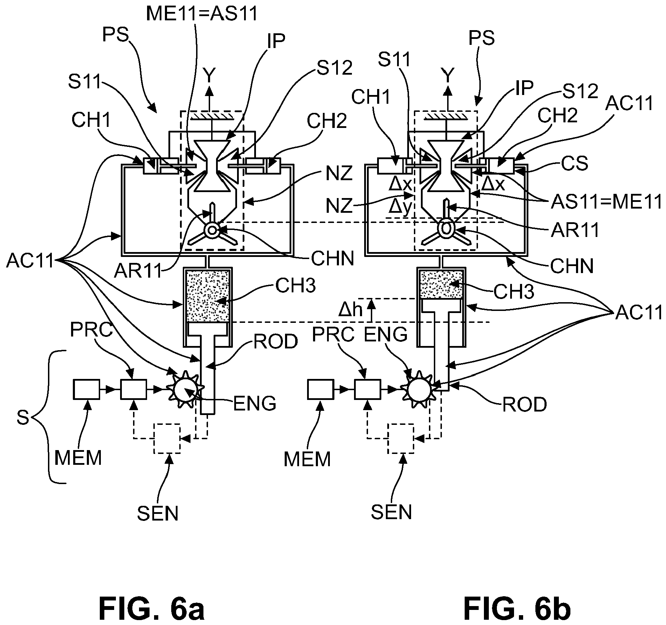

One of them is shown in Figure 6 with an associated control system CS, the mechanical structure S1 of figure 5 with the auxetic structure AS11 as mechanical element ME11 for transmitting a movement between the actuator AC11 and the arm AR11. Figure 6 comprises figure 6(a) where the nozzle NZ is at rest and figure 6(b) where the nozzle NZ is deformed under the action of the actuator AC11.

In this figure, the actuator AC11 is a fluidic actuator.

The actuator AC11 comprises a first chamber CH1, with a variable volume, arranged on the first side S11 of the auxetic structure AS11 and a second chamber CH2, with a variable volume, arranged on the second side S12 of the auxetic structure AS11. The chambers CH1, CH2 are connected to a third chamber CH3, common, capable of supplying a same pressure to both chambers CH1, CH2. Providing a same pressure in both chambers CH1, CH2 allows obtaining a linear movement of the arm AR11. The linear movement is made according to the Y direction, which is a radial direction with respect to longitudinal axis X of the channel CHN. Chamber CH3 is in that case put under pressure by a rod ROD activated by an engine ENG. The engine ENG, which is part of the actuator AC11. In figure 6, a control system CS is added to the actuator AC11 to control it. In that case, the actuator AC11 receives control instructions from the processor PRC. The PRC receives instructions, namely here an instruction on the position of the engine, from the database stocked in the memory MEM. In order to improve the exactness with which the instruction is reached, the control system CS may comprise a sensor SEN for sensing, in this embodiment, the position of the rod and to come back to the position of the engine or for directly sensing, the position of the engine. A correction may then be made between the instruction position and the actual position, for example through a proportional - integral - derivative (PID) controller implemented within the processor PRC.

By comparing Figure 6(b) to Figure 6(a), one can see the effect of the actuator AC11 on the arm AR11 (the arms AR12, AR13 do not move in this example). An activation of the engine ENG displaces the rod ROD upward, which implies a change in volume within the common chamber CH3. This change in volume in the chamber CH3 brings about an equal change of volume within the chambers CH1, CH2 (displacement Δx in both sides of the auxetic structure AS11, namely F1 = F2). The design of the auxetic structure AS11 then allows displacing the arm AR11 linearly.

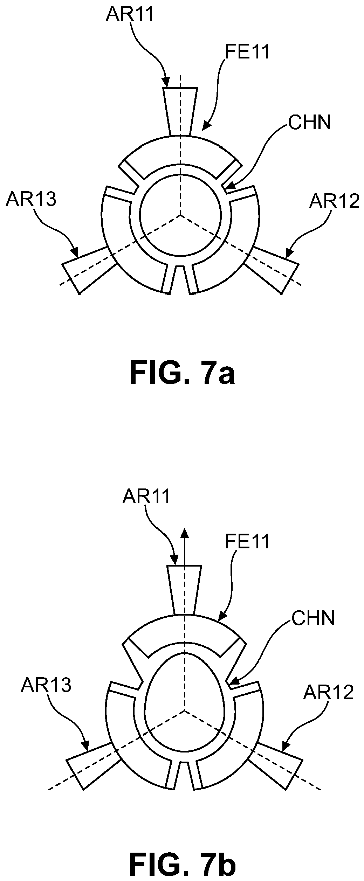

The effect of the actuator AC11 on the channel CHN can be better seen by comparing Figure 7(b) to Figure 7(a). Figure 7(a) shows the channel CHN of the nozzle NZ with its direct environment (namely here the three arms AR11, AR12, AR13 of the mechanical structure S1) when the nozzle is at rest. It corresponds to the situation illustrated in Figure 6(a). Figure 7(b) shows the same components when the auxetic structure AS11 undergoes a compression of its sides S11, S12 implying that the channel CHN is pulled. It corresponds to the situation illustrated in Figure 6(b). The shape of the cross-section of the channel CHN, circular at rest, becomes more or less as an egg-shaped after the action of the actuator AC11, the other arms AR12, AR13 being not displaced.

As visible in Figure 7(b), the inventors have indeed remarked that it is quite better to pull the channel CHN from its rest position to well control the internal shape of the channel, rather than doing the contrary.

Accordingly, in the frame of the invention, it is also proposed an actuation method comprising a step wherein said at least one control system CS provides instructions to at least one actuator in order to, from a rest position of the nozzle, pull the arm of the actuator. This method is implemented with the system S represented in Figure 4.

With the design of Figure 5, we may have one actuator per arm AR11, AR12, AR13, applied to the configuration of Figure 6. It means that the other actuators are independent from the actuator AC11, but with the same design. With the design of Figure 5, we may however also have one common actuator for several arms, and in particular on actuators for all the arms of a mechanical structure S1. In this latter case, the chamber CH3 of Figure 6 is common for all the auxetic structures AS11, AS12, AS13 and consequently, all the auxetic structures are displaced in a synchronous manner. In such a case, we have less possibilities to deform the channel, as we will just change the dimensions but not the shape of the cross-section of the channel. It may be sufficient for some applications.

Of course, what has been said for the actuation of the mechanical structure S1 is also applicable for the actuation of the mechanical structure S2.

And the actuation of both mechanical structures S1, S2 of transmission of movement to the channel CHN offers many possibilities to change the shape of the channel along its longitudinal axis.

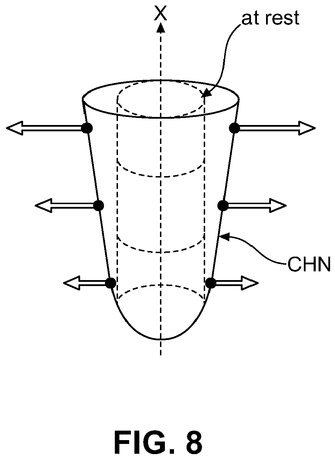

Figure 8 shows, for illustrative purposes only, an example of a variable shape of the channel CHN along its longitudinal axis (in operation). It is in that case obtained with three staged mechanical structures, as those illustrated in Figure 5 and with a set of actuators as that one shown in Figure 6. In dotted lines, the channel is at rest.

Another kind of actuator AC11 may be used with the actuator of auxetic type (figure 5).

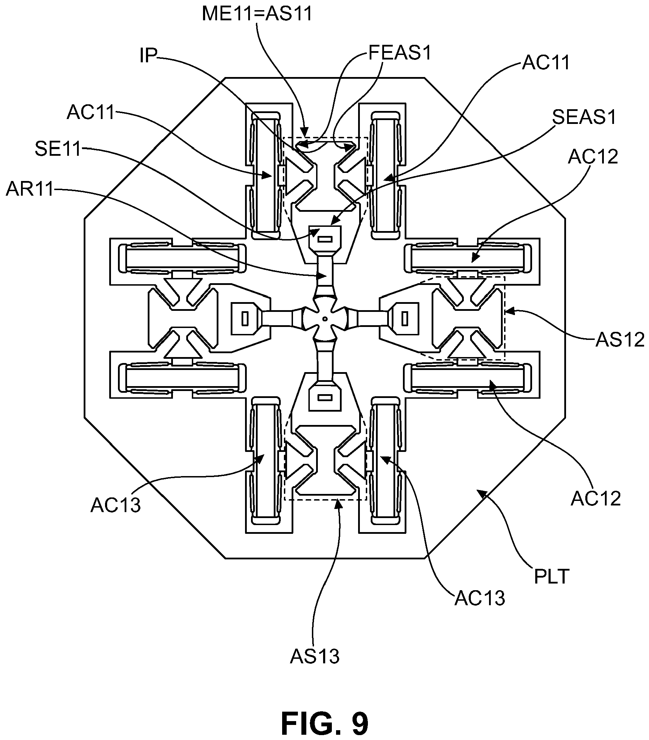

For example, Figure 9 illustrates the mechanical structure S1 of Figure 5 associated with piezoelectric actuators AC11, AC12, AC13, that may be used instead of the fluidic actuators described with respect to Figure 6.

Other kinds of actuators may be employed, such as pneumatic actuators, hydraulic actuators, or for instance actuators based on shape memory alloys with thermal activation.

Moreover, the use of an auxetic structure AS11, AS12, AS13 as a mechanical element ME11, ME12, ME13 of transmission of movement within a mechanical structure S1, S2 for transmitting the movement to the channel CHN is not compulsory. Indeed, many designs for the mechanical elements ME11, ME12, ME13 are possible.

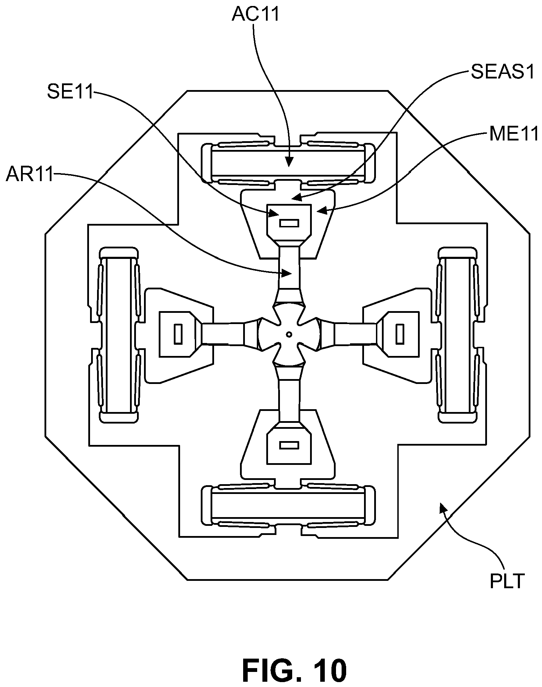

Figure 10 illustrates such a possibility where the mechanical element is simply a connection piece between the actuator AC11, piezoelectric, and the arm AR11.

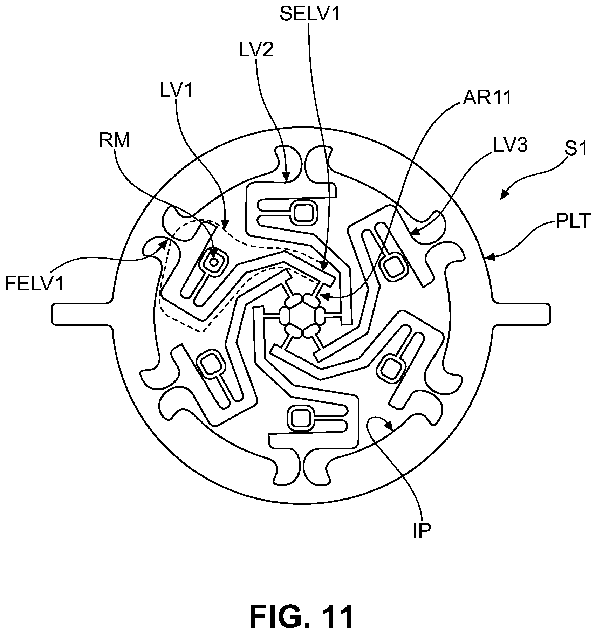

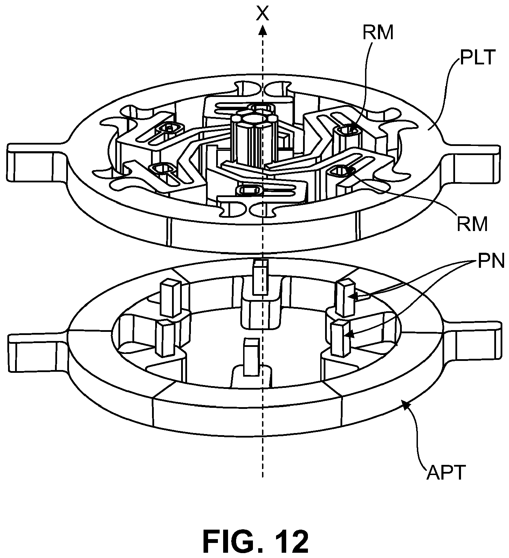

Nevertheless, more complex designs for the mechanical element ME11, ME12, ME13 may be envisaged. It is the case in the embodiment illustrated in Figure 11, as well as in the alternative embodiment of Figure 12.

In the design of Figure 11, the mechanical structure S1 is in the form of a plate PLT placed perpendicularly to the longitudinal axis X of the channel CHN. The mechanical structure S1 is provided with six mechanical elements, all the form of a lever LV1, LV2, LV3. A first end FELV1 of each lever is connected to an internal part IP of the plate PLT and a second end SELV1 of each lever is connected to a second end SE11 of the arm AR11. Each lever is configured to impart a linear movement to the arm AR11. As the arm AR11 is oriented radially, any displacement of the arm AR11 will be radial.

This design is particularly interesting if it is desired to maintain a symmetrical deformation to the channel, by using only one actuator, for example a simple electric engine, connected to an actuation plate APT as represented in figure 12. This actuation plate APT will impart a rotation movement to each lever LV1, LV2, LV3, for example thanks to pins PN of the actuation plate APT oriented parallel to the longitudinal axis X of the channel CHN, and cooperating with receiving means RM of the plate PLT. The rotation of the actuation plate APT around the longitudinal axis X of the channel CHN and relative to the plate PLT will bring about a synchronized displacement of each lever LV1, LV2, LV3 of the plate PLT.

In the above description, solutions with at least three arms AR11, AR12, AR13 per staged mechanical structures S1, S2 have been described, either with an actuator per arm or less or with a synchronized actuation or not of the different actuators.

It should however be noted that less mechanical elements AS11, ME11, LV1 for transmission of movement to the channel may be used.

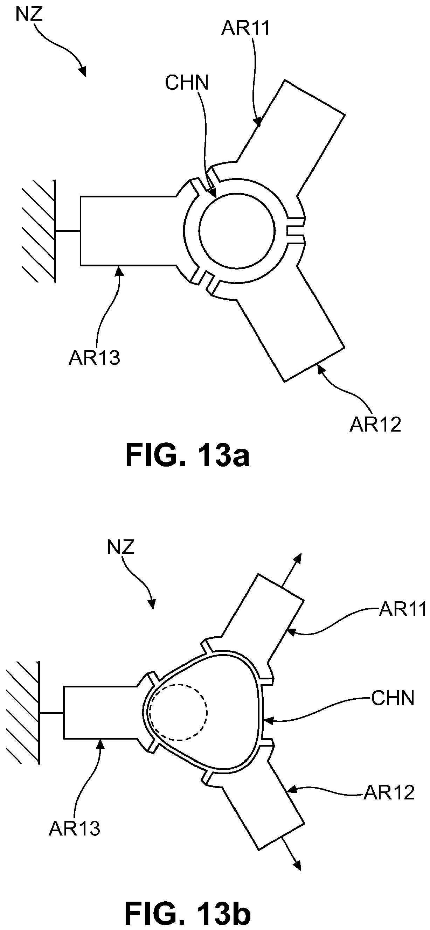

For example, Figure 13 represents a case where three arms AR11, AR12, AR13 are within the nozzle NZ, but only two AR11, AR12 of which are connected to a mechanical element AS11, ME11, LV1, for example as proposed respectively in figures 5, 9, 10, 11 or 12, for transmitting the movement of an actuator to the channel, the latter arm AR13 is fixed to the nozzle NZ. In Figure 13(a), one can see such a configuration at rest and in Figure 13(b), once the channel deformed by the actuation of the arms AR11, AR12. In that case, shape of the nozzle is changed as well as its dimensions and the position of the extrusion axis (in dotted lines in Figure 13(b), the position of the channel at rest). A shape of triangle for the cross-section of the channel CHN is obtained.

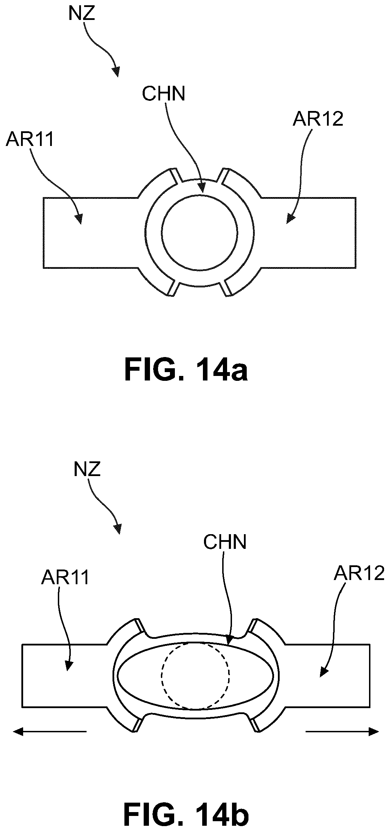

As another example, Figure 14 represents a case where only two arms AR11, AR12 are provided per mechanical structure S1, S2. The possibilities are less important than with the use of more arms, nevertheless it may be adequate for some applications. In Figure 14(a), one can see this configuration at rest and in Figure 14(b), in operation, once the channel has been deformed by the actuation of the arms AR11, AR12. In Figure 14(b), the actuation is the same for both arms, meaning that either a unique actuator is used or a synchronized actuation of two actuators, one per arm, is used or, more simply, a same control signal is sent to both actuators. In that case, the shape and the dimensions of the channel CHN are changed, but not the position of the extrusion axis (in dotted lines in Figure 14(b), the position of the channel at rest).

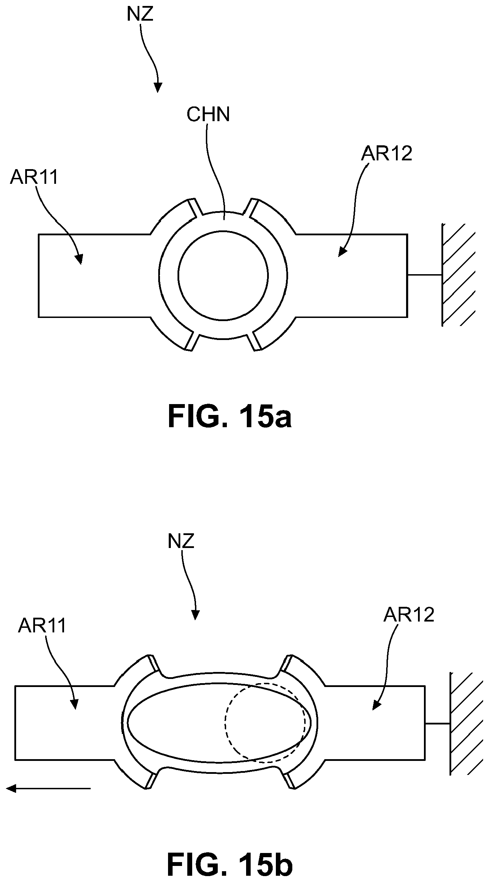

Figure 15 represents another situation wherein a mechanical structure S1, S2 comprises only two arms AR11, AR12, but only one AR11 of which is connected to an actuator, the other one AR12 remaining fix relative to the nozzle NZ. In figure 15(a), the position at rest and in Figure 15(b), the position in operation once the channel has been deformed. As for the example of Figure 13, everything is changed (shapes, dimensions, position of the extrusion axis), but the shape is changed in only one direction, so that an elliptical shape can be obtained, but not a triangle shape.

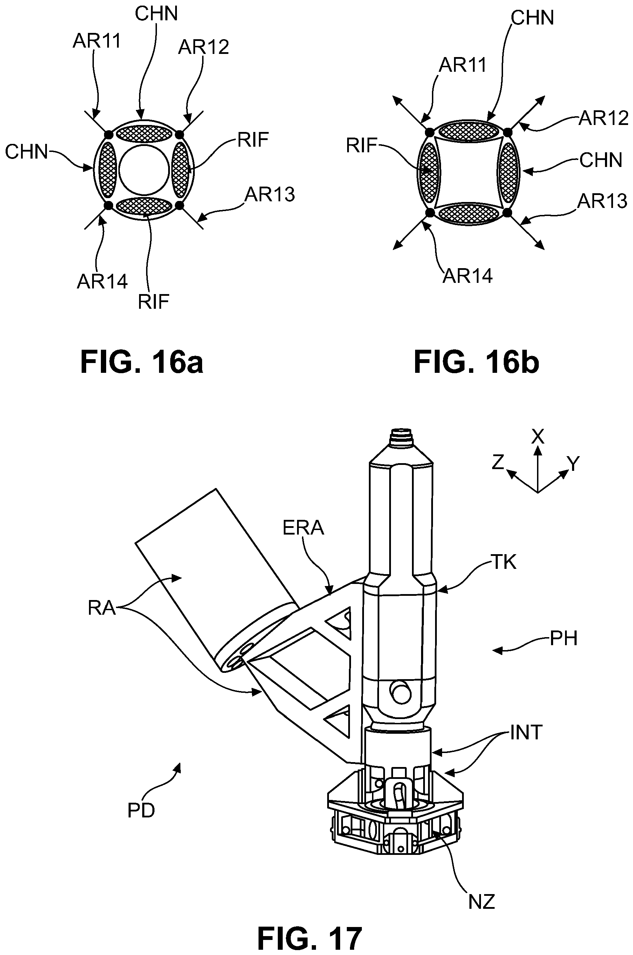

Figure 16 shows another design for the channel CHN of the nozzle NZ. In this design, the material forming the channel CHN includes reinforcing parts RIF between the connection points of the arms AR11, AR12, AR13, AR14 to the channel CHN. The reinforcing parts RIF are made of a material more rigid than the material having an elastomer-like behavior. It defines an anisotropic material. This allows modifying the way the channel deforms where a force is applied to it. Such a design therefore provides new way of deformations that may be useful in some applications as it can be seen form the comparison of Figure 16(b) to Figure 16(a). In figure 16(a), we can see the nozzle NZ at rest and inf Figure 16(b), the same nozzle NZ in operation, once the four arms AR11, AR12, AR13, AR14 have been actuated

Whatever the embodiment, at least two mechanical structures S1, S2 staged along the longitudinal axis X of the channel CHN remain necessary to be capable of changing the shape and/or dimensions of the channel along its longitudinal axis. According to the needs, we may have at least three mechanical structures staged along the longitudinal axis X of the channel CHN, for example if we want to have a conical shape for the channel, or sometimes at least four mechanical structures staged along the longitudinal axis X of the channel CHN, for example to obtain more rounded shapes for the channel CHN.

The system S (nozzle, actuator and the control system CS) according to the invention may be associated with a robotic arm RA comprising at least three degrees of freedom, all in translation. The degrees of freedom, all in translation, are of course the three directions of space X, Y, Z. These degrees of freedom provide several possibilities to put into position the nozzle NZ with respect to a printing zone.

That is why, the invention also proposes a printing device PD comprising:
- a robotic arm RA comprising several degrees of freedom;
- a printhead PH mounted on an end ERA of the robotic arm RA;
- a system S as described here above, which nozzle NZ is mounted on the printhead PH.

The printhead PH typically comprises a tank TK, for the material to be printed, for example a silicone and an extrusion part (not visible in Figure 17) located below the tank TK connected to the nozzle NZ. The extrusion part is typically an endless screw or a syringe pump.

In practice, an intermediate component INT will often be useful to mount the nozzle according to the invention on the printhead PH.

Advantageously, the robotic arm RA comprises six degrees of freedom, three in position and three in rotation. These degrees of freedom, in rotation, are of course the rotations around the axes X, Y and Z, respectively. All these degrees of freedom provide many possibilities to position the nozzle NZ with respect to a printing zone.

In operation, the control system CS will provide instructions to the actuators to give a certain geometry to the channel CHN and as a function of that, the flow rate of material to be extruded from the tank TK of the printhead PH will be adapted. In the same time, the path followed by the nozzle as well as its speed have to be controlled.

## Claims

1. A nozzle (NZ) comprising:
- a channel (CHN) made of a material with an elastomer-like behavior and having a longitudinal axis (X);
- at least two mechanical structures (S1, S2) for transmitting a movement to said channel, said at least two mechanical structures being staged along the longitudinal axis (X) of the channel and each mechanical structure comprising at least two arms (AR11, AR12, AR21, AR22) extending in a radial direction (R) with a first end (FE11, FE12, FE21, FE22) connected to the channel.

2. The nozzle (NZ) according to claim 1, wherein each mechanical structure (S1, S2) comprises at least three arms (AR11, AR12, AR13, AR21, AR22, AR23) extending in a radial direction with a first end (FE11, FE12, FE13, FE21, FE22, FE23) connected to the channel, said arms being regularly distributed around the longitudinal axis (X) of the channel (CHN).

3. The nozzle (NZ) according to one of the preceding claims, wherein the mechanical structure (S1, S2) is in the form of a plate (PLT) placed perpendicularly to the longitudinal axis (X) of the channel (CHN), said plate (PLT) including at least one mechanical element (ME11) of transmission of movement which a first end (FEAS1) is connected to an internal part (IP) of the plate (PLT) and which a second end (SEAS1) is connected to a second end (SE11) of one (AR11) of said at least two arms (AR11, AR12).

4. The nozzle according to the preceding claim, wherein said at least one mechanical element (AS11, LV1) of transmission of movement is chosen amongst an auxetic structure (AS11) or a lever (LV1).

5. The nozzle (NZ) according to one of the preceding claims, wherein the material with the elastomer-like behavior is partially reinforced with a material more rigid than said material with the elastomer-like behavior in such a way to have an anisotropic behavior.

6. A system (S) comprising:
- a nozzle (NZ) according to one of the preceding claims;
- at least one actuator (AC11, AC21) per mechanical structure (S1, S2) of transmission of movement to the channel, said at least one actuator being configured to actuate one or several arms (AR11, AR12, AR21, AR22) of at least one of the mechanical structures; and
- a control system (CS) for said at least one actuator.

7. The system (S) according to the preceding claim, comprising, for each mechanical structure (S1, S2), an actuator (AC11) per arm (AR11, AR12, AR13).

8. The system (S) according to one of the claims 6 to 8, wherein said at least one actuator is a fluidic actuator or a piezoelectric actuator.

9. A 3D printing device (PD) comprising:
- a robotic arm (RA) comprising several degrees of freedom ;
- a printhead (PH) mounted on an end of the robotic arm (RA) ;
- a system (S) according to one of the claims 6 to 8, which nozzle (NZ) is mounted on the printhead (PH).

10. The 3D printing device (PD) according to the preceding claim, wherein said robotic arm (RA) comprises six degrees of freedom, three in position and three in rotation.

11. An actuation method implemented with a system (S) according to one of the claims 6 to 8, comprising a step wherein said control system (CS) provides instructions to the at least one actuator in order to, from a rest position of the nozzle, pull the arm (AR11, AR12, AR13, AR21, AR22, AR23) of the actuator.
